# EUROPEAN PATENT SPECIFICATION

(11) **EP 1 746 854 B1**
(45) Date of publication and mention of the grant of the patent: **11.11.2009**
(21) Application number: 06014603.2
(22) Date of filing: 13.07.2006
(51) Int. Cl.: H04W 4/06

(54) **Mobile communication system and mobile terminal apparatus with a radio unit and a broadcast receiver.**
Mobilkommunikationssystem und Mobilstation mit einer Funkeinheit und einem Rundfunkempfänger
Système de communication et staion mobile avec une radio et un récepteur de diffusion

(30) Priority: 20.07.2005 JP 2005209946; 05.07.2006 JP 2006185311
(43) Date of publication of application: 24.01.2007
(73) Proprietor: Panasonic Corporation, Kadoma-shi Osaka 571-8501 (JP)
(72) Inventor: Sato, Tsuyoshi Matsushita Electric Ind. Co., Ltd., Chuo-ku Osaka-shi Osaka 540-6319 (JP)
(74) Representative: Haley, Stephen

(56) References cited:
- HAMADA, K; KAGEYAMA, M; OZAKI, T; NAITO, S; KOBAYASHI, A: "Prototype mobile phone capable of receiving and collaborating with terrestrial digital TV broadcasting" CONSUMER ELECTRONICS, 2005, 8 January 2005 (2005-01-08), - 12 January 2005 (2005-01-12) pages 455-456, XP002405309

## Description

### BACKGROUND OF THE INVENTION

### Field of the Invention

The present invention relates to a mobile communication system and a mobile terminal apparatus. Particularly, it relates to a technology for receiving emergency broadcast programs over a television or radio.

### Description of the Related Art

Common television or radio broadcasting services are arranged for broadcasting an emergency broadcast when an emergency situation such as disaster occurs. In response to it, every television or radio receiver is wanted to have a function for automatically being switched on and tuning and displaying details of the emergency broadcast, when the emergency broadcast is broadcasted. However, as energy saving has been focused and global environmental protection has been demanded throughout the world, even the emergency response broadcast should desirably be minimized in the power consumption.

For responding to such a demand, there is a technology as disclosed in Japanese Patent Laid-open Publication No. 2004-23591 , where a power routing is separated in a television receiver and a display apparatus so as to allow only the television receiver to remain energized constantly and when an emergency broadcast is received, the television receiver can automatically switch on the power source of the display apparatus from the off state to the on state.

According to the technology, the television receiver maintain constant surveillance of the emergency response broadcast while the display apparatus which is higher in the power consumption remains in the off state when a television program is not viewed. This will prevent every viewer from losing a chance to see an emergency broadcast without scarifying the energy saving.

However, there is a drawback in the conventional technology described above when it is applied to a mobile terminal apparatus such as a mobile telephone equipped with a broadcasting receiving function. As it is necessary that a broadcasting receiver remains in the on state without interruption for receiving an emergency broadcast, the mobile terminal apparatus will be increased in the power consumption. Also, as the mobile terminal apparatus is commonly energized with a battery, therefore, it causes a continuous operable time (stand-by durations and communication durations) shortening by remaining broadcasting receiver energized without interruption in view of the limit of the power supply.
[0005a] A mobile communication system according to the preamble of claim 1 has been described by Hamada et al. in "Prototype Mobile Phone Capable of Receiving and Collaborationg with Terrestrial Digital TV Broadcasting". CONSUMER ELECTRONICS 2005, 8 January 2005 - 12 January 2005, pages 445 - 456, XP002405309.

### SUMMARY OF THE INVENTION

It is hence a primary object of the present invention to provide a mobile terminal apparatus for use in a mobile communication system that can automatically receive en emergency broadcast without causing shortening of the operable time in a battery use, as defined in independent claims 11 and 18.

For achievement of the above object of the present invention, a mobile communication system comprises a station apparatus and a mobile terminal apparatus, wherein the mobile terminal apparatus includes a mobile communication radio unit for communicating by radio with the station apparatus and a broadcast receiver for receiving a broadcast signal from a broadcast station. In action, the station apparatus transmits by a radio link to the mobile terminal apparatus an annunciation information containing an emergency broadcast notification data for announcing presence of an emergency broadcast from the broadcast station, and annunciation data including a receiving condition information needed for receiving the emergency broadcast. In turn, the mobile terminal apparatus supplies a power source to the broadcast receiver upon showing presence of the emergency broadcast in the emergency broadcast notification data included in the annunciation data received at the mobile communication radio unit, and at the same time assign the receiving condition data contained in the received annunciation data to the broadcast receiver so as to receive the emergency broadcast by the broadcast receiver. The broadcast station may be either a television broadcast station or a radio broadcast station or their combination. In common, the broadcast station is arranged to transmit a digital broadcast signal.

It is now assumed that a user performs radio communication by operating the mobile terminal apparatus such as a mobile telephone over the system. At this time, radio communication is carried out between another mobile terminal apparatus or fixed terminal apparatus of the user through the station apparatus. It is presumed that the mobile communication radio unit remains turned on, but the broadcast receiver is turned off for minimizing the power consumption of a battery. The annunciation information is transmitted from the station apparatus to the mobile terminal apparatus. The annunciation information contains the emergency broadcast notification data for notifying the emergency broadcast from the broadcast station, and the receiving condition information needed for receiving the emergency broadcast. When the emergency broadcast notification data contained in the annunciation information received by the mobile communication radio unit indicates presence of the emergency broadcast, the controller in the mobile terminal apparatus supplies the power source to broadcast receiver and sets the broadcast receiver with the receiving condition data included in the annunciation data. This allows the broadcast receiver to automatically receive the emergency broadcast from the broadcast station. While saving of the power consumption is achieved by keeping the broadcast receiver turned off in a state that the mobile terminal apparatus is energized by the battery, it can be minimized in the power consumption, and the continuously operable time of the mobile terminal apparatus (the stand-by time and the communication time) is extended, the reception of an emergency broadcast can automatically be carried out.

The receiving condition data may contain preferably the channel number, the frequency, the mode, and the guard interval of the emergency broadcast. The mode represents a form of transmission determined by intervals of a carrier wave in a digital television or radio broadcast service where the broadcast signal is modified by the OFDM (orthogonal frequency division multiplex) technique. Further, the guard interval means an estrangement time between two adjacent effective symbols in the OFDM mode for eliminating an error derived from multi-path effect such as ghost.

A mobile terminal apparatus according to the present invention comprising: a mobile communication radio unit for communicating by radio with a station apparatus which transmits an annunciation data that contains an emergency broadcast notification data for announcing presence of an emergency broadcast from a broadcast station and a receiving condition data needed for receiving the emergency broadcast; a broadcast receiver for receiving a broadcast wave from the broadcast station; and a controller supplies a power source to the broadcast receiver upon showing presence of the emergency broadcast in the emergency broadcast notification data included in the annunciation data received at the mobile communication radio unit, and at the same time, assign the receiving condition data contained in the received annunciation information to the broadcast receiver.

In the construction, suppose, during radio communication between another mobile terminal apparatus or fixed terminal apparatus through the station apparatus, the mobile communication radio unit is turned on while the broadcast receiver remains turned off to minimize the power consumption. The mobile communication radio unit can receive the annunciation data from the station apparatus. The annunciation data contains the emergency broadcast notification data for notifying the emergency broadcast from the broadcast station and the receiving condition data needed for receiving the emergency broadcast. The controller judges whether or not the emergency broadcast notification data included in the annunciation data received by the mobile communication radio unit indicates presence of the emergency broadcast. When it indicates the presence, the controller supplies the power source to the broadcast receiver and sets the broadcast receiver with the receiving condition data. This allows the broadcast receiver to automatically receive the emergency broadcast from the broadcast station. While saving of the power consumption is achieved by keeping the broadcast receiver turned off in a state that the mobile terminal apparatus is energized by the battery, it can be minimized in the power consumption, and the continuously operable time of the mobile terminal apparatus (the stand-by time and the communication time) is extended, the reception of an emergency broadcast can automatically be carried out.

It is preferable that the controller supplies the power source to the broadcast receiver intermittently when the mobile communication radio unit fails to communicate with the station apparatus (when the mobile terminal apparatus is outside the service area), judge presence of the emergency broadcast through analyzing the broadcast signal received by the broadcast receiver and switch the broadcast receiver to a state of receiving the emergency broadcast when it is judged that the emergency broadcast is present.

According to the construction, in a state that the mobile terminal apparatus is outside the service area (a non-communication area), the controller intermittently supplies power to the broadcast receiver. The broadcast received by the broadcast receiver contains a control signal known as TMCC (transmission and multiplexing configuration control) signal. The TMCC signal carries a data about the start and end of the emergency broadcast, thus it can be judged whether or not the emergency broadcast is present. Accordingly, the controller can judge whether or not the emergency broadcast has been present based on the received TMCC signal. When it is judged that the emergency broadcast is present, the controller switches the broadcast receiver to a state of receiving the emergency broadcast. When it is located outside the service area in a state that the mobile terminal apparatus is driven by the battery, the power source is supplied to the broadcast receiver intermittently. By doing so, it is possible that the power consumption is minimized as compared with a continuous connection to the power source, the continuous operable time of the mobile terminal apparatus (the stand-by time and the communication time) is extended, and thereby the reception of an emergency broadcast can automatically be carried out outside the service area.

It is preferable that the controller cancels the intermittent power supply to the broadcast receiver with the power source when the communication between the mobile communication radio unit and the station apparatus is shifted from a disable state to an enable state. This allows the broadcast receiver to return to the power off state from the continuous state when the mobile terminal apparatus has been moved into the coverage area (the service area), thus so as to subsequently ensure the energy saving.

The mobile terminal apparatus may further comprise a sound emitter capable to set to a sound deadening mode, wherein it is preferable that the controller performs the reception of the emergency broadcast by the broadcast receiver and the vocalization of the content of the emergency broadcast by the sound emitter after canceling the sound deadening mode of the sound emitter at the reception of the emergency broadcast when the sound deadening mode is set. According to this, even when the emergency broadcast is received at the sound deadening mode (the manner mode), the reception can be noticed by the user by canceling the sound deadening mode.

When the controller performs the reception of the emergency broadcast by the broadcast receiver and the vocalization of the content of the emergency broadcast by the sound emitter after canceling the sound deadening mode of the sound emitter, it is preferable to set the sound volume at a maximum level in doing a vocalization of the content of the emergency broadcast by the sound emitter. This allows the user to notice the reception of the emergency broadcast most surely.

The mobile terminal apparatus may further comprise a storage unit in which the broadcast content is saved, wherein it is preferable that the controller memorizes the received emergency broadcast in the storage unit. Accordingly, in case that the user fails to see or hear the emergency broadcast at emergent broadcasting, the content of the emergency broadcast can be confirmed at any time after completion of the emergency broadcast by reproducing the memorized content of the emergency broadcast.

The mobile terminal apparatus may further comprise an alarm device to notify a user of the reception of the emergency broadcast, and an entry device for receiving an entry data inputted by the user, wherein it is preferable that the controller notify the user of the reception of the emergency broadcast by the alarm device, when the presence of the emergency broadcast has been finished, and terminate the action of the alarm device to notify the reception of the emergency broadcast after confirmation entry is carried out to the entry device by the user who confirmed the reception of the emergency broadcast by the alarm device. Accordingly, the user can certainly be notified of the reception of the emergency broadcast by the alarming action by the alarm device.

The alarm device may preferably be arranged to notify the user of the reception of the emergency broadcast by the use of one or a combination of visual display, alarm sound, vibration, and light emitting.

The mobile terminal apparatus may further comprise a detector for detecting an open and shut state of the mobile terminal apparatus which is of a freely foldable type, and a player for playing back the emergency broadcast, wherein after the controller is arranged to receive and record a picture of the emergency broadcast in the storage unit under being detected the shutting state of the mobile terminal apparatus by the detector, it is preferable to read out the emergency broadcast from the storage unit and play back the same with the player when the detector detects the opening state of the mobile terminal apparatus. By doing so, the user is able to promptly acknowledge the details of the emergency broadcast.

In addition, the mobile terminal apparatus may further comprise an alarm device for annunciation to the user of the mobile terminal apparatus, wherein it is preferable that the controller is arranged to announce the user of the reception of the emergency broadcast through the alarm device when the emergency broadcast is received by the broadcast receiver. The alarm device announces the user of the reception of the emergency broadcast by generating one or a combination of visual display, alarm sound, vibration, and light emitting. According to this, the user can certainly be notice the reception of the emergency broadcast.

The mobile terminal apparatus further comprises a display device for displaying a content of the emergency broadcast, wherein it is preferable that the controller is arranged to display the content of the emergency broadcast on the display device without canceling a communication with the other mobile terminal apparatus when the emergency broadcast is received during the communication with the other mobile terminal apparatus. According to this, the user is able to confirm the content of the emergency broadcast without interrupting communication with the other.

It is desirable that the emergency broadcast notification data contain an identifier capable for identifying the emergency broadcast individually and the controller is arranged to store the identifier included in the received emergency broadcast notification data, and then prevents the emergency broadcast received currently from saving content in the storage unit when the identifier included in the emergency broadcast notification data corresponding to the emergency broadcast received by the broadcast receiver is identical to the previously stored identifier. According to this, as unnecessary operation is not conducted, a processing load can be decreased in the controller, hence the power consumption of the mobile terminal apparatus is minimized.

It is desirable that the emergency broadcast notification data contain an identifier capable for identifying the emergency broadcast individually and the controller is arranged to store the identifier included in the received emergency broadcast notification data, and then continues the cancellation of the operation of the reception notification of the emergency broadcast by the alarm device when the identifier included in the emergency broadcast notification data corresponding to the emergency broadcast received by the broadcast receiver is identical to the previously saved identifier after the confirmatory input is carried out by the user to the entry device.

According to this, a troublesome action for the user is neglected by not doing an unwanted notification and thereby it can be achieved that a processing load can be decreased in the controller, hence the power consumption of the mobile terminal apparatus is minimized as unnecessary operation is not conducted.

As well, the emergency broadcast notification data contains the supporting data with respect to the position of the station apparatus, the location of a disaster or accidental event and the near evacuation sites and public facilities, and the mobile terminal apparatus further comprise an alarm device for announcing the user, wherein it is preferable that the controller is arranged to announce the user of the supporting data contained in the emergency broadcast notification data corresponding to the emergency broadcast upon the reception of the emergency broadcast.

This allows the user to recognize its situation and state and take an appropriate action.

According to the present invention as described above, the broadcast receiver remains turned off on a steady basis in a state that a mobile terminal apparatus, such as a mobile telephone, is driven with a battery, and thereby it is possible to ensure the energy saving and extend the operating life, namely, a continuous usage time (the stand-by time and the communication time) and automatically receive an emergency broadcast.

The technology of the present invention is effectively applicable to any type of mobile terminal apparatus such as a mobile telephone equipped with a function that any emergency broadcast from a television broadcast station or a radio broadcast station can automatically be received, and the mobile communication system.

### BRIEF DESCRIPTION OF THE DRAWINGS

Other objects of the present invention will be apparent from the understanding of the embodiments described below as are defined in the appended claims. A variety of other benefits than those not mentioned in this specification will also be understood by those who skilled in the art by performing the present invention.
Fig. 1 shows a schematic construction diagram of a mobile communication system according to Embodiments 1 to 3 of the present invention;
Fig. 2 is a block diagram showing a detailed construction of the mobile terminal apparatus according to Embodiments 1 to 3 of the present invention;
Fig. 3 is a diagram that shows a structure of data transmitted from a television or radio station to the station apparatus through a mobile communication network control apparatus according to Embodiments 1 to 3 of the present invention;
Fig. 4 is a diagram that shows a structure of an annunciation data transmitted from the station apparatus to the mobile terminal apparatus according to Embodiments 1 to 3 of the present invention;
Fig. 5 is a flowchart showing the action of the mobile terminal apparatus in starting the reception of an emergency broadcast according to Embodiment 1 of the present invention;
Fig. 6 is a flowchart showing the action of the mobile terminal apparatus in terminating the reception of the emergency broadcast according to Embodiment 1 of the present invention;
Fig. 7 is a flowchart showing the action of the mobile terminal apparatus located outside the coverage area according to Embodiment 2 of the present invention; and
Fig. 8 is a flowchart showing the action of the mobile terminal apparatus that is automatically changed depending on whether it is located inside or outside the coverage area according to Embodiment 3 of the present invention.

### DETAILED DESCRIPTION OF THE INVENTION

Some embodiments in a mobile communication system according to the present invention will be described in more detail, referring to the relevant drawings.

### (Embodiment 1)

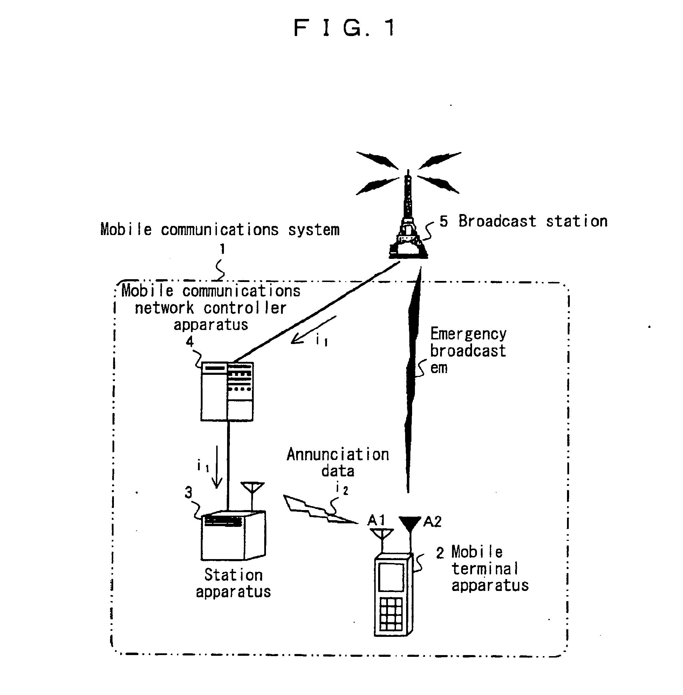

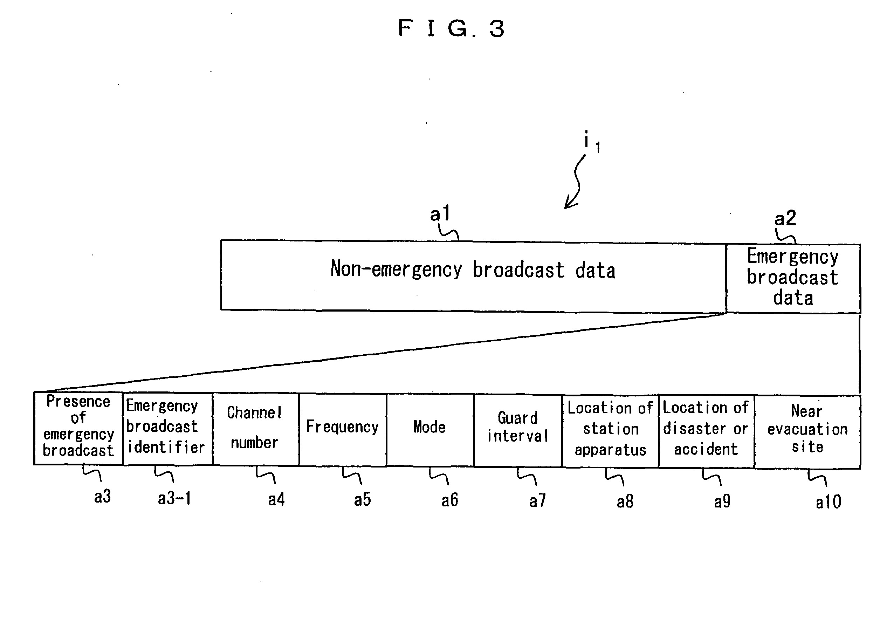

Fig. 1 is a schematic construction diagram of a mobile communication system according to Embodiment 1 of the present invention. The mobile communication system 1 includes a mobile terminal apparatus 2 equipped with a television/radio broadcasting receiver, a station apparatus 3, and a mobile communication network control apparatus 4. A television or radio broadcast station 5 is physically linked to the mobile communication network control apparatus 4 by a means such as a wide area network (WAN). Also, the mobile communication network control apparatus 4 is connected to the station apparatus 3 by an exclusive physical line. The broadcast station 5 transmits a data i₁ shown in Fig. 3 to the mobile communication network control apparatus 4 that also transmits the data i₁ to the station apparatus 3 in the same manner.

The data i₁ contains a data not concerned with emergency broadcast a1 and a data concerned with an emergency broadcast a2. The data concerned with an emergency broadcast a2 includes a data a3 indicating the presence or absence of the emergency broadcast, and an emergency broadcast identifier a3-1, an emergency broadcast channel number data a4 and a channel frequency data a5, a mode data a6, and a guard interval data a7. The mode data a6 indicates a transmission mode at the carrier wave intervals in the OFDM method (orthogonal frequency division multiplexing), which is needed for promptly receiving digital television or radio broadcasting programs. The guard interval data a7 represents a time interval between any two adjacent effective symbols and is needed for eliminating multi-path errors in the OFDM mode. The data concerned with an emergency broadcast a2 includes a location data a8 of station apparatus 3, a disaster or accident location data a9, and a near evacuation site data a10. A support information consists of those data.

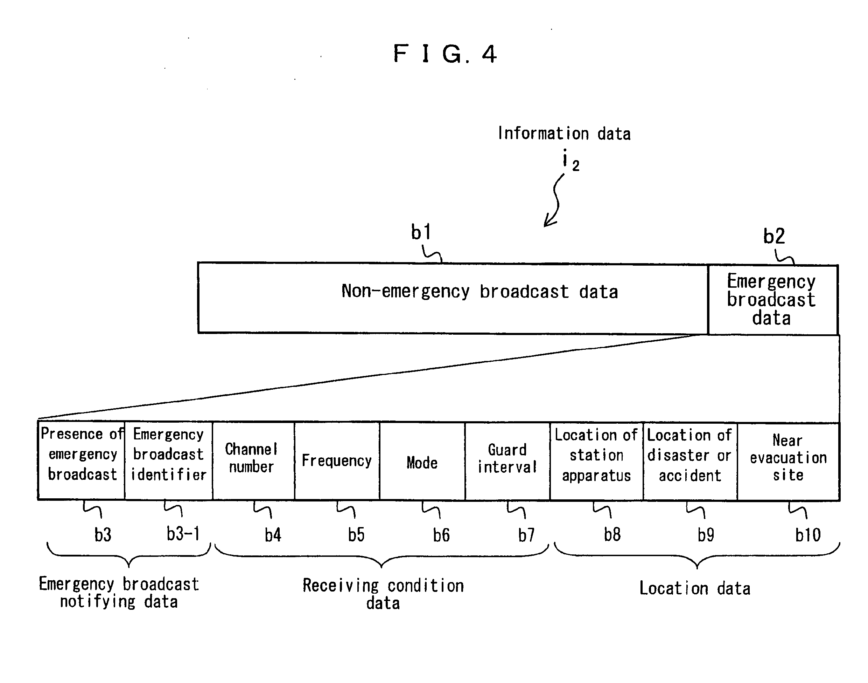

The station apparatus 3 transmits an annunciation data i2 shown in Fig. 4 to the mobile terminal apparatus 2. The annunciation data i2 contains a data not concerned with emergency broadcast b1 and a data concerned with emergency broadcast b2. The data concerned with emergency broadcast b2 includes an emergency broadcast alarm data b3 indicating a presence of the emergency broadcast, an emergency broadcast channel number data b4 and its channel frequency data b5, a mode data b6, and a guard interval data b7. Both the mode data b6 and the guard interval data b7 are needed for promptly receiving digital television or radio broadcast. The data concerned with emergency broadcast b2 also includes a location data b8 of station apparatus 3, a disaster or accident location data b9, and a near evacuation site location data b10. A support information consists of those data.

The receiving conditions data consists of the channel number data b4, the frequency data b5, the mode data b6, and the guard interval data b7.

In the mobile communication system 1 having the foregoing construction, the broadcast station 5 transmits an emergency broadcast em at emergency.

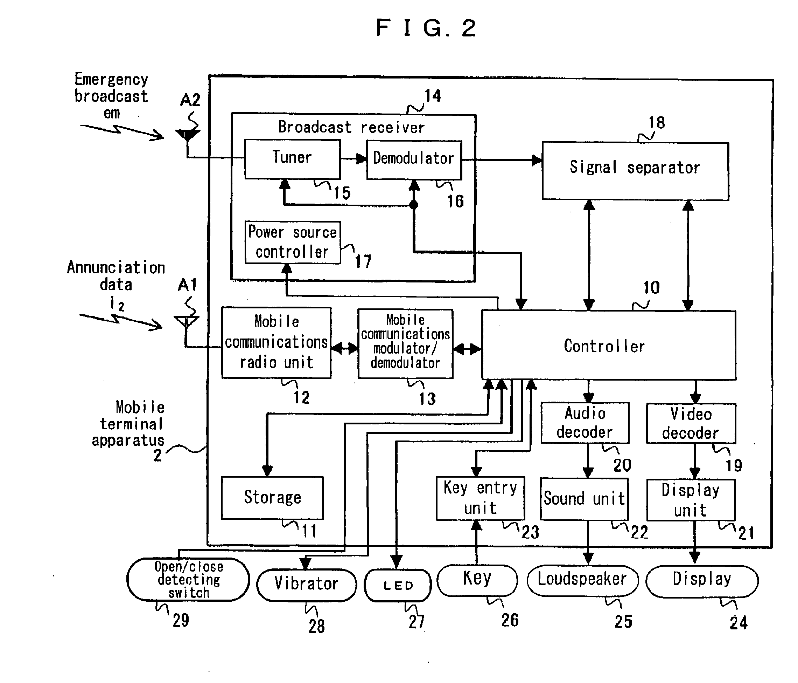

Fig. 2 is a functional block diagram of the mobile terminal apparatus 2. The mobile terminal apparatus 2 includes a broadcast receiver to receive television broadcasting programs and radio broadcasting programs. The reference symbols shown in Fig 2 denotes respectively that 10 is a controller, 11 is a storage unit, 12 is a mobile communication radio unit, 13 is a mobile communication modulator/demodulator, 14 is a broadcast receiver, 15 is a tuner, 16 is a demodulator, 17 is a power source controller, 18 is a signal separator, 19 is a video decoder, 20 is an audio decoder, 21 is a display unit, 22 is a sound unit, 23 is a key entry unit, 24 is a display, 25 is a loudspeaker, 26 is a key, 27 is an LED, 28 is a vibrator, 29 is an open/close detect switch, A1 is a mobile communication antenna, and A2 is a broadcast receiving antenna. The display unit 21 and the display 24 construct an example of a display apparatus. The sound unit 22 and the loudspeaker 25 construct an example of a sound emitter. The key entry unit 23 and the key 26 construct an example of an entry apparatus. The open/close detect switch 29 constructs an example of a detector. The display apparatus and the sound emitter construct an example of a player. Further, the display apparatus, the sound emitter, the LED 27, and the vibrator 28 constitute an example of an alarm device.

### <1> Description of fundamental action

The fundamental action of the mobile terminal apparatus 2 will be explained here.

### <1-1> Startup action of receiving the emergency broadcast

The mobile terminal apparatus 2 receives the annunciation data i₂ transmitted by radio from the station apparatus 3 through its mobile communication antenna A1 and the mobile communication radio unit 12 while the main power source of the relevant apparatus remains switched on. The received annunciation data i₂ is demodulated by the mobile communication modulator/demodulator 13 and transferred to the controller 10. The controller 10 extracts the data shown in Fig. 4 from the annunciation data i₂ and saves them in the storage unit 11 while constantly monitoring the emergency broadcast alarm data b3 that indicates a presence of the emergency broadcast. When it is detected that the emergency broadcast is present in the emergency broadcast alarm data b3 during monitoring or the emergency broadcast alarm data b3 includes the data indicating the emergency broadcast being on air, the controller 10 performs the following control. More specifically, the controller 10 examines whether or not the broadcast receiver 14 is receiving a television or radio broadcast program at that time and when judging not, the controller 10 controls the power source controller 17 in the broadcast receiver 14 to supply the power source to the broadcast receiver 14. On the other hand, when judging that the broadcast receiver 14 is receiving a television or radio broadcast program, the controller 10 saves the data such as the channel number data of the television or radio broadcast program in the storage unit 11 which has been received before the emergency broadcast is issued.

After the above preparatory steps, the controller 10 reads out the emergency broadcast notification data b2 in the annunciation data i₂ stored in the storage unit 11 and sets the receiving condition data contained in the data b2 to the tuner 15. In response, the tuner 15 receives the emergency broadcast em (a television or radio broadcast) transmitted from the broadcast station 5 via the antenna A2. The received broadcast wave signal is demodulated by the demodulator 16 and then transferred to the controller 10 after being separated by the signal separator 18 into a video signal, an audio signal, and a control signal.

The controller 10 transfers the video signal and the audio signal to the video decoder 19 and the audio decoder 20 respectively. Further, the controller 10 delivers the video and audio signals to the storage unit 11 where they are saved for recording their images and sounds.

The demodulated signal by the demodulator 16 contains a control signal called as a TMCC (transmission and multiplexing configuration control) in the digital television or radio broadcast service. The TMCC signal contains a data relevant to the start and end of the emergency broadcast. During receiving the television or radio broadcast program, the controller 10 analyzes the TMCC signal to monitor on a steady basis a presence of the emergency broadcast (continuation / completion of the broadcast program).

The controller 10 conducts one or a combination of the displaying action (using the display unit 21 and the display 24) , the sound emitting action (using the sound unit 22 and the loudspeaker 25), the vibrating action (using the vibrator 28), and the light emitting action (using the LED 27) in order to announce the reception of the emergency broadcast, thereby so that notification on the reception of the emergency broadcast is given to the user of the mobile terminal apparatus 2.

The user can set in advance the selection and combination of the notification actions. For example, when the displaying action, the sound emitting action, the vibrating action, and the light emitting action are selected in advance for notifying the reception of the emergency broadcast, the control 10 implements:
- displaying action of a visual message such as "Emergency broadcast is received" by the display 24;
- the sound emitting action of emitting an audio message such as "Emergency broadcast is received" by the loudspeaker 25;
- the vibrating action of conducting the vibrating action for a given length or at given intervals by the vibrator 28; and
- the light emitting or flashing action by the LED 27.

The user of the mobile terminal apparatus 2 can preset any combination of the above actions. For example, when the displaying action, the vibrating action, and the light emitting action have been selected for notifying the reception of the emergency broadcast, the controller 10 makes the display unit 21 to display the message such as "Emergency broadcast is being received" on the display 24 otherwise makes the vibrator 28 to vibrate the mobile terminal apparatus 2 for a given duration or during a periodic intervals and makes the LED 27 to emit a light or flash.

At the same time, the controller 10 makes the display unit 21 to display the data on the station location b8, the disaster or accident location b9, and the near evacuation site b10 on the display 24, that is location data included in the annunciation data i₂.

In case that the mobile terminal apparatus 2 is provided with a location identifying means such as a global positioning system (GPS), the controller 10 can also display the data obtained by the means.

The controller 10 may also recognize the repeated reception of the emergency broadcast through identifying the emergency broadcast identifier b3-1 from the annunciation data i₂.

Alternatively, the controller 10 may compare the emergency broadcast identifier b3-1 in the annunciation data i₂ currently received with another emergency broadcast identifier in the previously received emergency broadcast (saved in the storage unit 11) and cancel the audio and sound recording of the data and the repeated notification to the user of the reception of the emergency broadcast when it is judged that the two identifiers are identical.

When the mobile terminal apparatus 2 is set in a manner mode, so-called a sound deadening mode, the controller 10 conducts the following control. In this case, the controller 10 cancels the manner mode set in the sound unit 22. The controller 10 then saves a data indicating that the manner mode has been set before the emergency broadcast is received in the storage unit 11. The controller 10 also saves a data about the sound volume preset in the sound unit 22 before the reception of the emergency broadcast in the storage unit 11 and sets the sound volume in the sound unit 22 to a maximum. After those preparatory steps mentioned above, the controller 10 transmits the video signal and the audio signal decoded by the video decoder 19 and the audio decoder 20 respectively to the display unit 21 and the sound unit 22 and thereby is made to start a display and a sound production of the emergency broadcast on the display 24 and the loudspeaker 25 respectively.

Here, when the mobile terminal apparatus 2 is being communicated with another mobile terminal apparatus, the controller 10 controls so that one or any combination of the alarm sound emission by the loudspeaker 25, the alarm vibration by the vibrator 28, and the alarm light emission by the LED 27 are carried out. After notification on the reception of the emergency broadcast is surely conducted to the user of the mobile terminal apparatus 2 through such the alarm notifications, the controller 10 displays the video picture of the received emergency broadcast on the display 24. At this time, the controller 10 permits to continue the communication between the mobile terminal apparatus 2 and another mobile terminal apparatus. The operation of displaying or not displaying the broadcasting content and the operation of holding or disconnecting the communication at the reception of an emergency broadcast during communication can be selected according to preset in the mobile terminal apparatus 2 by the user.

### <1-2> Operation to terminate the emergency broadcast reception

As described above, the controller 10 analyzes the TMCC signal and is monitoring the presence of the emergency broadcast on a steady basis (continuation /termination of the broadcast program) during receiving the television or radio broadcast program. When it is detected by the analysis of the TMCC signal that the reception of the emergency broadcast is terminated, the controller 10 stops the video and audio recording of the emergency broadcast in the storage unit 11. More specifically, the controller 10 cancels the transmission of the video and audio signals to the storage unit 11. Thereafter, the controller 10 reads out a data indicating the state of the mobile terminal apparatus 2 before the reception of the emergency broadcast from the storage unit 11.

When the readout data indicates no reception of any television or radio broadcast program before the reception of the emergency broadcast, the controller 10 cancels the transfer of the video signal and the audio signal to the display unit 21 and the sound unit 22 respectively so as to terminate the reception of the television or radio broadcast program while and at the same time controls the power source controller 17 to stop a power supply to the broadcast receiver 14.

Meanwhile, when the readout data indicates that a television or radio broadcast program has been received before the reception of the emergency broadcast, the controller 10 reads out the receiving condition data including the channel number saved before the reception of the emergency broadcast from the storage unit 11 and sets the receiving condition data in the tuner 15 to place back to the channel before the reception of the emergency broadcast. Then, the controller 10 reads out the sound volume data saved in the storage unit 11 before the reception of the emergency broadcast to place back to the sound level before the reception of the emergency broadcast and sets the sound volume data in sound unit 22.

In addition, the controller 10 carries out the setting in the display unit 21 to display the message, for example, "Emergency broadcast is received" on the display 24 and also carries out the setting in the sound unit 22 to emit an alarm sound from the loudspeaker 25. Thereby, the display 24 and the loudspeaker 25 display the message and emit an alarm sound respectively.

And otherwise the controller 10 may also implement a control of the vibrator 28 to vibrate the mobile terminal apparatus 2 for a given length of time or at a periodic intervals and a control of the LED 27 to emit a light or flash. Moreover, when the mobile terminal apparatus 2 is a foldable type mobile telephone equipped with the open/shut detection switch 29 for detecting the opening and shutting state, the controller 10 is able to conduct a control of automatically playing back as following. More particularly, the controller 11 announced from the open/shut detection switch 29 that the mobile terminal apparatus 2 is opened up by the user, reads out the content of the emergency broadcast from the storage unit 11, and transfers it to the video decoder 19 and the audio decoder 20 in order to be decoded to a video signal and an audio signal separately, so that it is possible to display the message on the display 24 and emit the alarm sound from the loudspeaker 25 by performing the output control of the video signal and the audio signal in the display unit 21 and the sound unit 22 respectively.

The display operation of the message and the sound operation of voice production are maintained until the user pushes the key 26 on the mobile terminal apparatus 2. As the display operation and the sound operation of voice production are the control operations that are implemented for the purpose to notify the user of the mobile terminal apparatus 2 of the reception of the emergency broadcast, the operations are continued until the user pushes the key 26 on the mobile terminal apparatus 2. In response to a annunciation from the key entry unit 23 indicating that the user pushed the key 26, the controller 10 releases both the display setup and the sound setup of voice production set respectively in the display unit 21 and the sound unit 22.

### <2> Detailed description on an operation of the automatic reception of the emergency broadcast

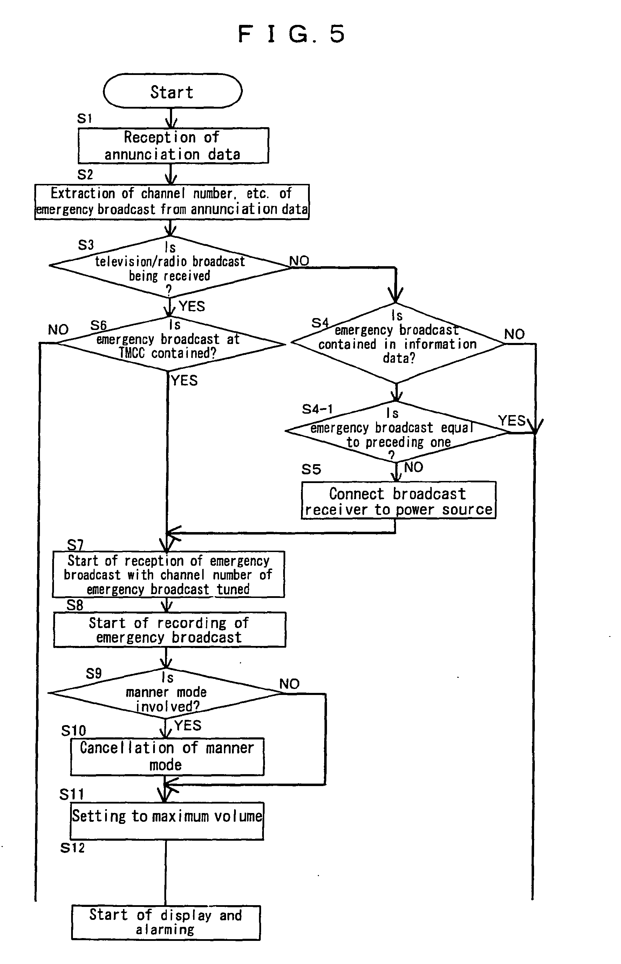

Fig. 5 is a flowchart showing the operation of the mobile terminal apparatus 2 when reception of the emergency broadcast is started. First, when the annunciation data i₂ is received at the mobile communication radio unit 12 at Step S1, then moving to Step S2, the controller 10 obtains the receiving condition data such as the channel number b4 and the frequency b5 of the emergency broadcast em from the annunciation data i₂ to save it in the storage unit 11. Next, in Steps S3, the controller 10 judges whether or not a television or radio broadcast program is received at the time. If it isn't, move to Step S4. If it is, move to Step S6.

At Step S4, the controller 10 judges a presence or absence of the emergency broadcast em. This judgment is implemented by decrypting the emergency broadcast notification data b3 included in the annunciation data i₂ that indicates the presence or absence of the emergency broadcast. When it is judged at Step S4 that there is not the emergency broadcast em, the operation is terminated. On one hand, when it is judged that there is the emergency broadcast em, the operation goes to Step S4-1 where the controller 10 judges whether or not the current emergency broadcast em is equal to another emergency broadcast received previously. The judgment is implemented by comparison between the emergency broadcast identifier b3-1 contained in the annunciation data i₂ received currently and another emergency broadcast identifier b3-1 (which has been received previously and saved in the storage unit 11). When the two identifiers are identical to each other, it is judged to be the same emergency broadcast.

When it is judged at Step S4-1 that the emergency broadcast em announced to do broadcast in the annunciation data i₂ received currently is a first emergency broadcast, the operation goes to Step S5 where the controller 10 controls the power source controller 17 to start the power supply to the broadcast receiver 14 before the procedure jumps to Step S7.

When it is judged at Step S3 that no television or radio broadcast program is received, the controller 10 judges a presence or absence of the emergency broadcast em based on the TMCC signal in the control data transmitted as a part of the broadcast at Step S6. When it is judged at Step S6 that there is not the emergency broadcast, a series of the operations are terminated. When it is judged at Step S6 that there is the emergency broadcast, the operation goes to Step S7.

At Step S7, the controller 10 obtains the receiving condition data extracted from the annunciation data i₂ thus and sets the condition in the tuner 15 so as to start the reception of the emergency broadcast em. Then, the controller 10 starts an video and a audio recording of the emergency broadcast em at Step S8.

After that, the controller 10 judges at Step S9 whether or not a sound deadening setup such as the manner mode is made. If it isn't, the operation skips to Step S11. When it is so, the operation moves to Step S10 to release the manner mode.

And then, at Step S11, the controller 10 sets the sound volume to a maximum level so that the user of the mobile terminal apparatus 2 is aware of a presence of the emergency broadcast em. Thereafter, at Step S12, the controller 10 starts to display a content of the broadcast and give a vocalization of the same.

### <3> Detailed description on an operation of an automatic termination of reception of the emergency broadcast

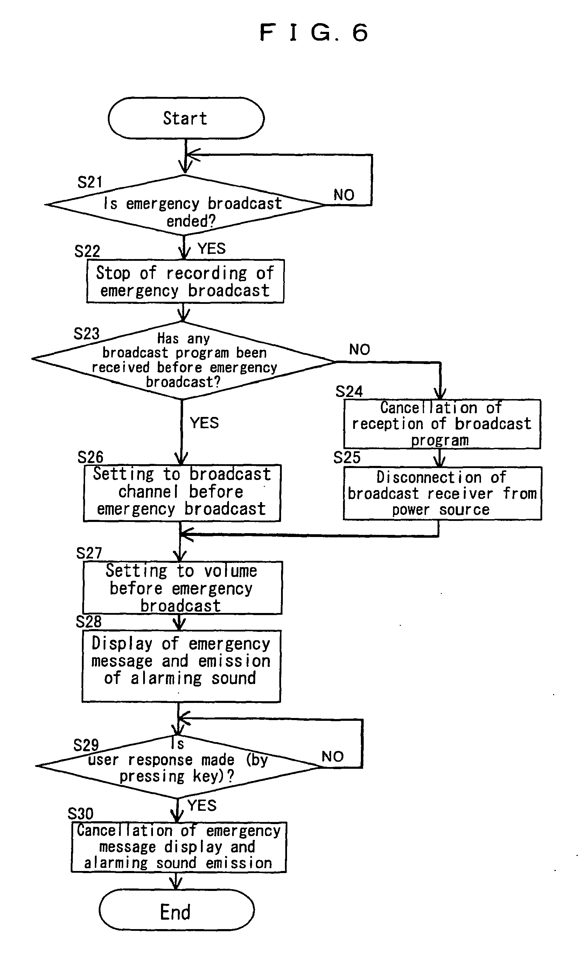

Fig. 6 is a flowchart showing a operation of the mobile terminal apparatus in terminating the reception of the emergency broadcast em. First, the controller 10 judges at Step S21 whether the emergency broadcast em is finished or not. The termination of the emergency broadcast em is implemented by decrypting the TMCC signal contained in a broadcast signal of the emergency broadcast em. The operation of Step S21 is continued throughout the reception of the emergency broadcast em.

When it is judged at Step S21 that the emergency broadcast em is finished, the controller 10 stops the video and audio recording of the emergency broadcast em at Step S22. Then, the controller 10 judges at Step S23 whether or not any television or radio broadcast has been received before the emergency broadcast em is done.

When it is judged at Step S23 that no television or radio broadcast program has been received before the emergency broadcast em is done, the controller 10 advances to Step S24 to terminate the separating and decoding operation of the video signal and the audio signal in order to stop the reception of the television or radio broadcast. After the controller 10 stops the power supply to the broadcast receiver 14 at Step S25, moves to Step S27.

Meanwhile, when it is judged at Step S23 that a television or radio broadcast has been received before the emergency broadcast em is done, the controller 10 moves to Step S26 to read out the receiving condition data on the channel number saved in the storage unit 11 before the reception of the emergency broadcast em in order to set the condition in the tuner 15 before the operation goes to Step S27.

At Step S27, the controller 10 reads out the volume setup data saved in the storage unit 11 before the reception of the emergency broadcast em is initiated and sets the sound volume in the sound unit 22. And then, the controller 10 then moves to Step S28 where the following alarming operation is carried out:
- display operation of the message such as "emergency broadcast is received",
- sound operation of voice production to emit the alarming sound,
- vibrating operation to vibrate the mobile terminal apparatus 2 for a given length of time or at a periodic intervals by controlling the vibrator 28, and
- operation to emit a light or flash by controlling the LED 27.

Further, the controller 10 judges at Step S29 whether or not by the user of the mobile terminal apparatus 2 pushed down the key 26 responding to the alarming operation given at Step S28. When it is judged at Step S29 that the key 26 is pressed down, the controller 10 advances to Step S30 to stop the alarming operation given at Step S28 and terminate a series of treatment. Until it can be judged at Step S29 that the key 26 is pressed down, the controller 10 continues to carry out the alarming action given at Step S28.

### (Embodiment 2)

Embodiment 2 of the present invention relates to a function when a mobile terminal apparatus 2 is located outside the telephone service areas (referred to as out of coverage areas hereinafter). Figs. 1 to 4 in the Embodiment 1 is quoted also in this embodiment.

In this embodiment, the annunciation data i₂ is unable to be received because the mobile terminal apparatus 2 is outside the coverage area. Therefore, the mobile terminal apparatus 2 receives the television or radio broadcast intermittently or at a periodic intervals in order to judge a presence or absence of an emergency broadcast em while minimizing its power consumption.

### <1> Description of fundamental operation

When the mobile terminal apparatus 2 is located outside the coverage area where no television or radio broadcast is not received, the controller 10 conducts measurement for a predetermined length of time at a periodic intervals. After then, the controller 10 controls the power source controller 17 to supply the power source to the broadcast receiver 14 whenever the predetermined length of time has elapsed. The broadcast receiver 14 supplied the power source then receives a television or radio broadcast transmitted from a broadcast station 5 at the tuner 15 via the antenna A2. The received broadcast wave signal is then demodulated by the demodulator 16. The controller 10 decrypts the TMCC signal included in the demodulated signal to confirm the presence or absence of an emergency broadcast em. When it is judged that the emergency broadcast em is not done, the controller 10 controls the power source controller 17 to stop the power supply to the broadcast receiver 14 and starts again the measurement for a predetermined length of time as described previously. When it is judged that an emergency broadcast em is done, the controller 10 along with that of Embodiment 1 reads out the receiving condition data, such as the channel number of the emergency broadcast em, that has been previously received from the preceding annunciation data i₂ or set in advance, from the storage unit 11, and sets the condition in the tuner 15 to start the reception of receiving the emergency broadcast em.

Further, the video and audio recording is started by making to save the received video signal and the audio signal of the emergency broadcast em in the storage unit 11. The controller 10 then judges whether or not the sound unit 22 is at the manner mode, namely, the sound deadening setup. When it is set, the controller 10 releases the manner mode in the sound unit 22 and is made to save a data, indicating that the manner mode has been preset before the emergency broadcast is received, in the storage unit 11. Also, the controller 10 sets the sound volume to a maximum level in the sound unit 22 and saves a data, indicating that the sound volume has been preset immediately before the emergency broadcast is received, in the storage unit 11.

After the above preparatory steps, the controller 10 transmits the video signal and the audio signal via the video decoder 19 and the audio decoder 20 to the display unit 21 and the sound unit 22 respectively so that it is made to start display and voice production of the emergency broadcast em from the display 24 and the loudspeaker 25.

In case that the mobile terminal apparatus 2 is receiving the television or radio broadcast program, the controller 10 monitors the presence or absence of an emergency broadcast em on a steady basis through decrypting the TMCC signal contained in the broadcast wave as in Embodiment 1.

### <2> Detailed description of the operation shown in flowchart

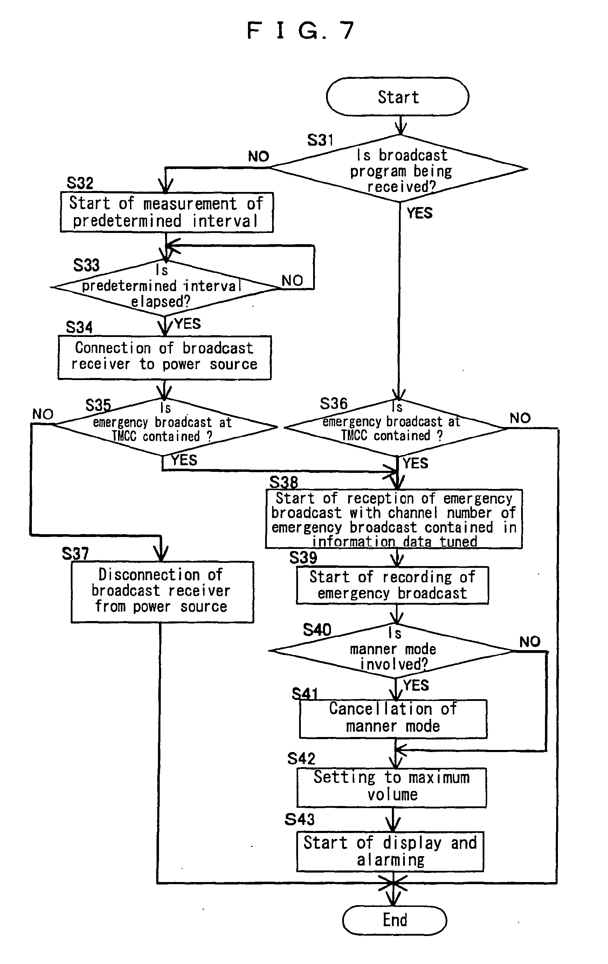

Fig. 7 is a flowchart showing an operation of the mobile terminal apparatus 2 when it is outside the coverage area. First, the controller 10 judges at Step S31 whether or not a television or radio broadcast is received. When it is judged at Step S31 that no television or radio broadcast program is received, the controller 10 advances to Step S32 to start the measurement at a predetermined length of time and then judges at Step S33 whether or not the predetermined length of time has elapsed. When it is judged at Step S33 that the predetermined length of time has elapsed, the controller 10 goes to Step S34 to control the power source controller 17 to provide the power supply to the broadcast receiver 14 for starting the reception of the broadcast.

Next, at Step S35, the controller 10 judges the presence or absence of the emergency broadcast em by decrypting the TMCC signal contained in the received broadcast wave signal. When it is judged at Step S35 that the emergency broadcast em is not done, the controller 10 advances to Step S37 to terminate the power supply to the broadcast receiver 14 and a series of the operations is finished.

On one hand, when it is judged at Step S35 that the emergency broadcast em is done, the controller 10 goes to Step S38 to read out the receiving condition data, that indicates the channel number of the emergency broadcast em received previously from the preceding annunciation data i₂ or preset in advance, from the storage unit 11, and sets the condition in the tuner 15 to start the reception of the emergency broadcast em.

After then, at Step S39, the controller 10 starts the video and audio recording by making to save the video signal and the audio signal of the received emergency broadcast em in the storage unit 11. The controller 10 judges at Step S40 whether or not the sound unit 22 is set at the manner mode, when it is judged to be not, skips to Step S42. When it is judged at Step S40 that the sound unit 22 is set at the manner mode, the controller 10 moves to Step S41 for releasing the manner mode. After the controller 10 then goes to Step S42 to set the sound volume to a maximum level in the sound unit 22 and then starts the display and the voice production of the emergency broadcast em in Step S43. Simultaneously, the controller 10 makes to save a data indicating that the manner mode has been set in the sound unit 22 before the reception of the emergency broadcast em in the storage unit 11. Also, the controller 10 makes to save a data indicating the sound volume which has been set in the sound unit 22 just before the reception of the emergency broadcast em in the storage unit 11.

The description now returns to Step S31. When it is judged based on the judgment at Step S31 that a television or radio broadcast program is received, the controller 10 jumps to Step S36 to judge the presence or absence of the emergency broadcast em by decrypting the TMCC signal included in the received broadcast wave signal. When it is judged at Step S36 that the emergency broadcast em is not done, the controller 10 terminates a series of the operations. When it is judged at Step S37 that the emergency broadcast em is done, the procedure goes to Step S38 and subsequently the steps from S38 and S42 are repeated.

### (Embodiment 3)

Embodiment 3 of the present invention relates to the case that the mobile terminal apparatus moves between the inside and the outside of communication area, namely, the telephone service area or outside the coverage area. Figs. 1 to 4, Fig. 5, and Fig. 7 shown in Embodiment 1 are quoted in this embodiment.

In case of this embodiment, the mobile terminal apparatus 2 is moved in and out between the inside and the outside the coverage area. And at this time, the mobile terminal apparatus 2 confirms the presence of an emergency broadcast em all the time while minimizing its power consumption, by automatically switching the operation of Embodiment 1 and the operation of Embodiment 2.

### <1> Description of fundamental operation

When the annunciation data i2 transmitted from the base station apparatus 3 by radio can be received at the mobile communication antenna A1 and the mobile communication radio unit 12, the controller 10 implements the operation of Embodiment 1. When it is failed to receive the annunciation data i₂, the controller 10 conducts the operation of Embodiment 2.

### <2> Detailed description of the operation according to flowchart

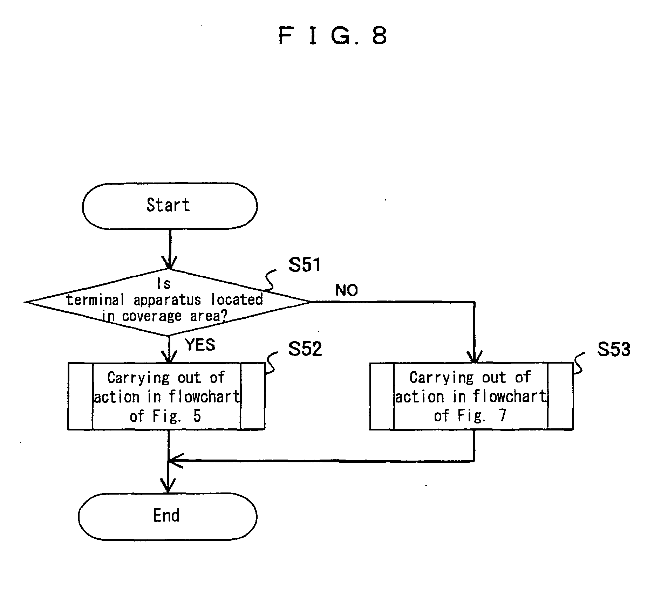

Fig. 8 is a flowchart in automatically switching the content of operation depending on whether the mobile terminal apparatus 2 is located inside or outside the coverage area.

First, the procedure starts with the controller 10 judges at Step S51 whether the mobile terminal apparatus 2 is located inside or outside the coverage area. When it is judged at Step S51 that the apparatus 2 is located inside the coverage area, the controller 10 advances to Step S52 for carrying out the control of Embodiment 1 shown in the flowchart of Fig. 5. When it is judged at Step S51 that the apparatus 2 is located outside the coverage area, the controller 10 moves to Step S53 for carrying out the control of Embodiment 2 shown in the flowchart of Fig. 7.

Like this, in Embodiment 3, the operation of Embodiment 1 and the operation of Embodiment 2 can be automatically switched depending on whether the mobile terminal apparatus 2 is located inside or outside the coverage area.

## Claims

1. A mobile communication system comprising a station apparatus (3) and a mobile terminal apparatus (2), the mobile terminal apparatus including a mobile communication radio unit (12) for communicating by radio with the station apparatus (3) and a broadcast receiver (14) for receiving a broadcast wave transmitted from a broadcast station (5), **characterized in that**
the station apparatus (3) is adapted to transmit by radio an annunciation data (i₂) including an emergency broadcast notification data (b3, b3-1) for announcing the presence of an emergency broadcast and a receiving condition data (b4 - b7) needed for receiving the emergency broadcast that are transmitted from the broadcast station (5) to the mobile terminal apparatus (2), and
the mobile terminal apparatus (2) is adapted to give a power supply to the broadcast receiver (14) when the emergency broadcast notification data included in the annunciation data received at the mobile communication radio unit (12) shows the presence of the emergency broadcast, and concurrently set up the receiving condition data included in the received annunciation data to the broadcast receiver.

2. The mobile communication system according to claim 1, wherein
the receiving condition data contains the channel number (b4), the frequency (b5), the mode showing transmission pattern (b6) at an interval of a carrier wave in OFDM format and the guard interval (b7) of the emergency broadcast.

3. A mobile terminal apparatus (2) comprising:
a mobile communication radio unit (12) for communicating by radio with a station apparatus (3), and a broadcast receiver (14) for receiving a broadcast wave transmitted from a broadcast station (5),
**characterized in that** a controller (10) is adapted to supply a power source to the broadcast receiver (14) when emergency broadcast notification data (b3, b3-1) included in annunciation data (i₂) received by the mobile communication radio unit (2) from a broadcast station (5) via the station appaatus (3) show the presence of an emergency broadcast sent by the broadcast station (5), and concurrently set up receiving condition data (b4 - b7) included in the received annunciation data to the broadcast receiver.

4. The mobile terminal apparatus according to claim 3, wherein
the controller (10) supplies the power source intermittently to the broadcast receiver and judges the presence of the emergency broadcast through analyzing the broadcast wave received by the broadcast receiver (14) when the mobile communication radio unit (12) is incapable to communicate with the station apparatus, and then switches the broadcast receiver 814) to the state capable of receiving the emergency broadcast when it is judged to be present.

5. The mobile terminal apparatus according to claim 4, wherein
the controller (10) terminates the intermittent power supply to the broadcast receiver when the communication between the mobile communication radio unit (2) and the station apparatus (3) is shifted from a disabled state to an enabled state.

6. The mobile terminal apparatus according to claim 3, further comprising:
a sound emitter (22, 25) which is able to set up a sound deadening function, wherein
the controller (10) releases the setup when a sound deadening of the sound emitter is set at the reception of the emergency broadcast, and then performs the reception of the emergency broadcast through the broadcast receiver and a voice production of the broadcast content of the emergency broadcast through the sound emitter.

7. The mobile terminal apparatus according to claim 6, wherein
the controller (10) sets the sound volume at a maximum level in the sound emitter (22. 25) when the reception of the emergency broadcast through the broadcast receiver and a voice production of the broadcast content of the emergency broadcast through the sound emitter are performed after a sound deadening setup of the sound emitter is released.

8. The mobile terminal apparatus according to claim 3, further comprising:
a storage unit (11) for saving a broadcast content, wherein
the controller (10) saves the received emergency broadcast in the storage unit.

9. The mobile terminal apparatus according to claim 3, further comprising:
an alarm device (27, 28) for announcing the reception of the emergency broadcast to a user; and
an entry device (23, 26) for receiving an entry data produced by the user, wherein
the controller (10) announces the reception of the emergency broadcast to the user through the alarm device when the emergency broadcast has been finished, and then terminates an operation of annunciation on the reception through the alarm device after confirmation entry is carried out to the entry device by the user who has confirmed a reception annunciation through the alarm device.

10. The mobile terminal apparatus according to claim 9, wherein
the alarm device (27, 28) informs the user of the reception of the emergency broadcast by one or a combination of visual display, alarm sound, vibration, and light emission.

11. The mobile terminal apparatus according to claim 8 which has a foldable shape so as to open and shut freely, further comprising:
a detector (29) for detecting the open and shut state of the mobile terminal apparatus (2); and
a player (21, 24, 22, 25) for playing back the emergency broadcast, wherein
the controller (10) receives the emergency broadcast and saves it in the storage unit (11) under a state where the detector detects the shutting of the mobile terminal apparatus, and then reads out the emergency broadcast recorded in the storage unit and is made to play back the same with the player when the detector detects the opening of the mobile terminal apparatus.

12. The mobile terminal apparatus according to claim 3, further comprising:
an alarm device (27, 28) for informing the user of the reception of the emergency broadcast, wherein
the controller (10) informs the user of the reception of the emergency broadcast through the alarm device when the broadcast receiver receives the emergency broadcast.

13. The mobile terminal apparatus according to claim 12, wherein
the alarm device (27, 28) informs the user of the reception of the emergency broadcast by one or a combination of visual display, alarm sound, vibration, and light emission.

14. The mobile terminal apparatus according to claim 3, further comprising:
a display device (21, 24) for displaying a content of the emergency broadcast, wherein
the controller (10) displays the content of the emergency broadcast on the display device while keeping the current communication when the emergency broadcast is received during the communication of the mobile terminal apparatus with another mobile terminal apparatus.

15. The mobile terminal apparatus according to claim 8, wherein
the emergency broadcast notification data (b3, b3-1) contains an identifier (b3-1) that is able to identify the emergency broadcast individually, and
the controller (10) memorizes the identifier included in the received emergency broadcast notification data and is not made a saving content of the current emergency broadcast in the storage unit (11) when the identifier contained in the emergency broadcast notification data corresponding to the emergency broadcast received by the broadcast receiver is identical to the previously saved identifier.

16. The mobile terminal apparatus according to claim 9, wherein
the emergency broadcast notification data (b3, b3-1) contains an identifier (b3-1) that is able to identify the emergency broadcast individually, and
the controller (10) memorizes the identifier included in the received emergency broadcast notification data and continues a terminated situation of the reception annunciation operation by the alarm device when the identifier contained in the emergency broadcast notification data corresponding to the emergency broadcast received by the broadcast receiver is identical to the previously saved identifier after the user implements an confirmation input to the entry device (23, 26).

17. The mobile terminal apparatus according to claim 3, further comprising:
an alarm device (27, 28) for informing the user of the reception of the emergency broadcast, wherein
the emergency broadcast notification data contains (b3, b3-1) support data (b8 - b10) with respect to the position of the station apparatus, the location of a disaster or accident, and the near evacuation site and the public facilities, and
the controller (10) informs the user of the support data contained in the emergency broadcast notification data corresponding to the emergency broadcast through the alarm device when the emergency broadcast is received.

18. A communication method in a mobile terminal apparatus (2), **characterized by** the steps of:
receiving, from a station appratus (3), annunciation data (i₂) including emergency broadcast notification data (b3, b3-1) notifying emergency broadcast from a broadcast station (5) and receiving condition data (b4 - b7) necessary in receiving the emergency broadcast; and
supplying power to a broadcast receiver (14) and setting the receiving condition data in the broadcast receiver in response to the emergency broadcast notification data.

19. The communication method in the mobile terminal apparatus according to claim 18, further including the steps of
intermittently supplying power to the broadcast receiver (14) and detecting existence of emergency broadcast in a broadcast received by the broadcast receiver when the communication with the station apparatus (5) is impossible; and
switching the broadcast receiver to an emergency broadcast receiving state when the existence of the emergency broadcast is detected.

20. The communication method in the mobile terminal apparatus according to claim 19, further including the step of stopping intermittent power supply to the broadcast receiver (14) when the communication with the station apparatus (5) is shifted from a disabled state to an enabled state.

21. The communication method in the mobile terminal apparatus according to claim 18, further including the steps of:
judging whether a sound deadening mode is active when receiving the emergency broadcast; and
canceling the sound deadening mode and receiving the emergency broadcast.

22. The communication method in the mobile terminal apparatus according to claim 21, further including the step of receiving the emergency broadcast at a maximum reproducing volume when the sound deadening mode is canceled.

23. The communication method in the mobile terminal apparatus according to claim 18, further including the step of recording content of the emergency broadcast in a storage unit (11) when receiving the emergency broadcast.

24. The communication method in the mobile terminal apparatus according to claim 18, further including the step of informing a user that the emergency broadcast has been received upon termination of the emergency broadcast, and the step of terminating the informing step when the user makes a confirmation input in response to the notification that the emergency broadcast has been received.

25. The communication method in the mobile terminal apparatus according to claim 24, the informing step is accomplished through one of or a combination of display, audio, vibration and light emission.

## Patentansprüche

1. Ein mobiles Kommunikationssystem bestehend aus einem Stationsgerät (3) und einem mobilen Datenendgerät (2), wobei das mobile Datenendgerät eine mobile Kommunikationsfunkeinheit (12) zur Kommunikation mit dem Stationsgerät (3) und einen Rundfunkempfänger (14) über Funk zum Empfang einer Rundfunkwelle, die von einer Rundfunkstation (5) übertragen wird, umfasst, **dadurch gekennzeichnet, dass**
das Stationsgerät (3) zur Übertragung von Meldedaten (l₂) einschließlich von Notfallsendungsmitteilungsdaten (b3, b3-1) über Funk zur Ankündigung des Vorhandenseins einer Notfallsendung und für den Empfang der Notfallsendung benötigten Empfangsbedingungsdaten (b4 - b7), die von der Rundfunkstation (5) an das mobile Datenendgerät (2) übertragen werden, angepasst ist, und
das mobile Datenendgerät (2) angepasst ist, um eine Stromversorgung für den Rundfunkempfänger (14) bereitzustellen, wenn die Notfallsendungsmitteilungsdaten, die in den an der mobilen Kommunikationsfunkeinheit (12) empfangenen Meldedaten enthalten sind, das Vorhandensein einer Notfallsendung zeigen, und gleichzeitig die Empfangsbedingungsdaten einzustellen, die in den empfangenen Meldedaten an den Rundfunkempfänger enthalten sind.

2. Das mobile Kommunikationssystem gemäß Anspruch 1, wobei die
Empfangsbedingungsdaten die Kanalnummer (b4), die Frequenz (b5), den Modus, der das Übertragungsmuster (b6) bei einem Intervall einer Trägerwelle im OFDM-Format zeigt, und das Schutzintervall (b7) der Notfallsendung enthalten.

3. Ein mobiles Datenendgerät (2) bestehend aus:
einer mobilen Kommunikationsfunkeinheit (12) zur Kommunikation mit einem Stationsgerät (3) über Funk, und einem Rundfunkempfänger (14) zum Empfang einer Rundfunkwelle, die von einer Rundfunkstation (5) übertragen wird,
**gekennzeichnet dadurch, dass** ein Steuergerät (10) angepasst ist, um eine Stromquelle für den Rundfunkempfänger (14) bereitzustellen, wenn die Notfallsendungsmitteilungsdaten (b3, b3-1), die in den Meldedaten (l₂) enthalten sind, die von der mobilen Kommunikationsfunkeinheit (2) von einer Rundfunkstation (5) über das Stationsgerät (3) empfangen werden, das Vorhandensein einer Notfallsendung zeigen, die von der Rundfunkstation (5) gesendet wird, und gleichzeitig Empfangsbedingungsdaten (b4 - b7) einzustellen, die in den empfangenen Meldedaten an den Rundfunkempfänger enthalten sind.

4. Das mobile Datenendgerät gemäß Anspruch 3, wobei das Steuergerät (10)
zeitweilig die Stromversorgung für den Rundfunkempfänger bereitstellt und das Vorhandensein der Notfallsendung durch Analyse der von dem Rundfunkempfänger (14) empfangenen Rundfunkwelle beurteilt, wenn die mobile Kommunikationsfunkeinheit (12) nicht in der Lage ist, mit dem Stationsgerät zu kommunizieren, und den Rundfunkempfänger (14) anschließend auf den Zustand schaltet, in dem er die Notfallsendung empfangen kann, wenn ihr Vorhandensein festgestellt wird.

5. Das mobile Datenendgerät gemäß Anspruch 4, wobei das Steuergerät (10) die
zeitweilige Stromversorgung an den Rundfunkempfänger beendet, wenn die Kommunikation zwischen der mobilen Kommunikationsfunkeinheit (2) und dem Stationsgerät (3) von einem deaktivierten Zustand auf einen aktivierten Zustand umgestellt wird.

6. Das mobile Datenendgerät gemäß Anspruch 3, weiter bestehend aus: einem
Tonsender (22, 25), der in der Lage ist, eine Schalldämpfungsfunktion einzustellen, wobei das Steuergerät (10) die Einstellung freigibt, wenn eine Schalldämpfung des Tonsenders bei Empfang der Notfallsendung eingestellt wird, und anschließend den Empfang der Notfallsendung durch den Rundfunkempfänger und eine Sprachproduktion des Rundfunkinhalts der Notfallsendung durch den Tonsender ausführt.

7. Das mobile Datenendgerät gemäß Anspruch 6, wobei das Steuergerät (10) die
Tonlautstärke auf eine maximale Stufe im Tonsender (22, 25) einstellt, wenn der Empfang der Notfallsendung durch den Rundfunkempfänger und eine Sprachproduktion des Rundfunkinhalts der Notfallsendung durch den Tonsender ausgeführt werden, nachdem eine Tonschalldämpfungseinstellung des Tonsenders freigegeben worden ist.

8. Das mobile Datenendgerät gemäß Anspruch 3, weiter bestehend aus: einer
Speichereinheit (11) zum Speichern eines Rundfunkinhalts, wobei das
Steuergerät (10) die gespeicherte Notfallsendung in der Speichereinheit ablegt.

9. Das mobile Datenendgerät gemäß Anspruch 3, weiter bestehend aus einem
Alarmgerät (27, 28) zur Ankündigung des Empfangs der Notfallsendung an einen Benutzer; und
einem Eingabegerät (23, 26) zum Empfang von Eingabedaten, die vom Benutzer produziert werden, wobei
das Steuergerät (10) den Empfang der Notfallsendung an den Benutzer über das Alarmgerät ankündigt, wenn die Notfallsendung abgeschlossen ist, und anschließend eine Ankündigungsoperation zum Empfang durch das Alarmgerät beendet, nachdem der Bestätigungseintrag am Eingabegerät vom Benutzer ausgeführt worden ist, der eine Empfangsankündigung über das Alarmgerät bestätigt hat.

10. Das mobile Datenendgerät gemäß Anspruch 9, wobei das Alarmgerät (27, 28)
den Benutzer über den Empfang der Notfallsendung durch eine oder eine Kombination aus visueller Anzeige, Alarmton, Vibration und Lichtemission informiert.

11. Das mobile Datenendgerät gemäß Anspruch 8, das zusammengeklappt werden kann, damit es sich frei öffnen und schließen kann, weiter bestehend aus:
einem Detektor (29) zur Erfassung des offenen und geschlossenen Zustands des mobilen Datenendgeräts (2); und
einem Abspielgerät (21, 24, 22, 25) zur Wiedergabe der Notfallsendung, wobei
das Steuergerät (10) die Notfallsendung empfängt und in der Speichereinheit (11) unter einem Zustand ablegt, in dem der Detektor das Schließen des mobilen Datenendgeräts erfasst, und anschließend die Notfallsendung ausliest, die in der Speichereinheit aufgezeichnet ist, und dazu veranlasst wird, dieselbe mit dem Abspielgerät wiederzugeben, wenn der Detektor das Öffnen des mobilen Datenendgeräts erfasst.

12. Das mobile Datenendgerät gemäß Anspruch 3, weiter bestehend aus:
einem Alarmgerät (27, 28), um den Benutzer über den Empfang der Notfallsendung zu informieren, wobei
das Steuergerät (10) den Benutzer durch das Alarmgerät über den Empfang der Notfallsendung informiert, wenn der Rundfunkempfänger die Notfallsendung empfängt.

13. Das mobile Datenendgerät gemäß Anspruch 12, wobei das Alarmgerät (27,
28) den Benutzer durch ein Element oder eine Kombination aus visueller Anzeige, Alarmton, Vibration und Lichtemission über den Empfang der Notfallsendung informiert.

14. Das mobile Datenendgerät gemäß Anspruch 3, weiter bestehend aus: einem
Anzeigegerät (21, 24) zum Anzeigen eines Inhalts der Notfallsendung, wobei
das Steuergerät (10) den Inhalt der Notfallsendung auf dem Anzeigegerät anzeigt, während die aktuelle Kommunikation aufrecht erhalten bleibt, wenn die Notfallsendung während der Kommunikation des mobilen Datenendgeräts mit einem anderen mobilen Datenendgerät empfangen wird.

15. Das mobile Datenendgerät gemäß Anspruch 8, wobei die
Notfallsendungsmitteilungsdaten (b3, b3-1) einen Identifikator (b3-1) enthalten, der die Notfallsendung individuell identifizieren kann, und
das Steuergerät (10) den Identifikator abspeichert, der in den empfangenen Notfallsendungsmitteilungsdaten enthalten ist, und dieser nicht zu einem Speicherinhalt der aktuellen Notfallsendung in der Speichereinheit (11) gemacht wird, wenn der Identifikator, der in den Notfallsendungsmitteilungsdaten enthalten ist, die zu der vom Rundfunksender empfangenen Notfallsendung gehören, mit dem zuvor gespeicherten Identifikator identisch ist.

16. Das mobile Datenendgerät gemäß Anspruch 9, wobei die
Notfallsendungsmitteilungsdaten (b3, b3-1) einen Identifikator (b3-1) enthalten, der in der Lage ist, die Notfallsendung individuell zu identifizieren, und
das Steuergerät (10) den Identifikator abspeichert, der in den empfangenen Notfallsendungsmitteilungsdaten enthalten ist, und eine durch das Alarmgerät beendete Situation der Empfangsmeldeoperation fortsetzt, wenn der Identifikator, der in den Notfallsendungsmitteilungsdaten enthalten ist, die zu der vom Rundfunksender empfangenen Notfallsendung gehören, mit dem zuvor gespeicherten Identifikator identisch ist, nachdem der Benutzer eine Bestätigungseingabe in das Eingabegerät (23, 26) implementiert hat.

17. Das mobile Datenendgerät gemäß Anspruch 3, weiter bestehend aus:
einem Alarmgerät (27, 28) zur Information des Benutzers über den Empfang der Notfallsendung, wobei
die Notfallsendungsmitteilungsdaten (b3, b3-1) Begleitdaten (b8 - b10) bezüglich der Position des Stationsgeräts, des Orts einer Katastrophe oder eines Unfalls und der nächsten Evakuierungsstelle und der öffentlichen Einrichtungen enthalten, und
das Steuergerät (10) den Benutzer über das Alarmgerät über die in den Notfallsendungsmitteilungsdaten enthaltenen Begleitdaten informiert, die zur der Notfallsendung gehören, wenn die Notfallsendung empfangen wird.

18. Eine Kommunikationsmethode in einem mobilen Datenendgerät (2), durch folgende Schritte **gekennzeichnet:**
Empfang von Meldedaten (l₂) einschließlich von Notfallsendungsmitteilungsdaten (b3, b3-1) von einem Stationsgerät (3), die über eine Notfallsendung von einer Rundfunkstation (5) benachrichtigen, und Empfangsbedingungsdaten (b4 - b7), die für den Empfang der Notfallsendung erforderlich sind; und
Bereitstellung einer Stromversorgung für einen Rundfunkempfänger (14) und Einstellung der Empfangsbedingungsdaten in dem Rundfunkempfänger als Reaktion auf die Notfallsendungsmitteilungsdaten.

19. Die Kommunikationsmethode in dem mobilen Datenendgerät gemäß Anspruch 18, weiter einschließlich folgender Schritte:
zeitweilige Bereitstellung einer Stromversorgung für den Rundfunkempfänger (14) und Erfassung des Vorhandenseins einer Notfallsendung in einer Sendung, die von einem Rundfunkempfänger empfangen wird, wenn die Kommunikation mit dem Stationsgerät (5) unmöglich ist; und
Umstellen des Rundfunkempfängers auf einen Notfallsendungs-Empfangszustand, wenn das Vorhandensein einer Notfallsendung festgestellt wird.

20. Die Kommunikationsmethode in dem mobilen Datenendgerät gemäß Anspruch 19, weiter einschlie0lich des Schritts, der Unterbrechung der zeitweiligen Stromversorgung für den Rundfunkempfänger (14), wenn die Kommunikation mit dem Stationsgerät (5) von einem deaktivierten Zustand auf einen aktivierten Zustand umgestellt wird.

21. Die Kommunikationsmethode in dem mobilen Datenendgerät gemäß Anspruch 18, weiter einschließlich folgender Schritte:
Beurteilung, ob ein Schalldämpfungsmodus aktiv ist, wenn die Notfallsendung empfangen wird; und Abbrechen des Schalldämpfungsmodus und Empfang der Notfallsendung.

22. Die Kommunikationsmethode in dem mobilen Datenendgerät gemäß Anspruch 21, weiter einschließlich des Schritts des Empfangs der Notfallsendung bei einer maximalen Wiedergabelautstärke, wenn der Schalldämpfungsmodus abgebrochen wird.

23. Die Kommunikationsmethode in dem mobilen Datenendgerät gemäß Anspruch 18, weiter einschließlich des Schritts der Aufzeichnung des Inhalts der Notfallsendung in einer Speichereinheit (11), wenn die Notfallsendung empfangen wird.

24. Die Kommunikationsmethode in dem mobilen Datenendgerät gemäß Anspruch 18, weiter einschließlich des Schritts der Information eines Benutzers bei Beendigung der Notfallsendung, dass die Notfallsendung empfangen worden ist, und des Schritts der Beendigung des Informationsschritts, wenn der Benutzer eine Bestätigungseingabe als Reaktion auf die Mitteilung vornimmt, dass die Notfallsendung empfangen worden ist.

25. Die Kommunikationsmethode in dem mobilen Datenendgerät gemäß Anspruch 24, wobei der Informationsschritt durch ein Element oder eine Kombination aus Anzeige, Ton, Vibration und Lichtemission erreicht wird.

## Revendications

1. Un système mobile de communication composé d'un élément station (3) et d'un élément terminal mobile (2), l'élément terminal mobile comprend une unité mobile de communication radio (12) pour communiquer par radio avec l'élément station (3) et un récepteur de diffusion générale (14) pour recevoir une onde de diffusion générale transmise depuis une station de diffusion générale (5) **caractérisée par**
l'élément station (3) est adapté à transmettre par radio des données d'annonciation (i₂), y compris une notification de diffusion générale d'urgence (b3, b3-1) pour annoncer la présence d'une diffusion générale d'urgence et des données de condition de réception (b4 - b7) nécessaires à la réception de la diffusion générale d'urgence transmise depuis la station de diffusion générale (5) vers l'élément terminal mobile (2) et
l'élément terminal mobile (2) est adapté à fournir une alimentation électrique au récepteur de diffusion générale (14) si les données de la notification de diffusion générale d'urgence inclues dans les données d'annonciation reçues par l'unité mobile de communication radio (12) indiquent la présence de la diffusion générale d'urgence, et configurent simultanément les données de condition de réception inclues dans les données d'annonciation reçues par le récepteur de diffusion générale.

2. Le système mobile de communication conformément à la revendication 1, où les données de condition de réception comportent le numéro du canal (b4), la fréquence (b5), le mode indiquant la configuration de la transmission (b6) à un intervalle d'une onde porteuse de modulation OFDM et l'intervalle de garde (b7) de la diffusion générale d'urgence.

3. Un élément terminal mobile (2) comprenant :
une unité mobile de communication radio (12) pour communiquer par radio avec l'élément station (3) et un récepteur de diffusion générale (14) pour recevoir une onde de diffusion générale transmise depuis une station de diffusion générale (5),
**caractérisée par** un contrôleur (10) adapté à fournir une source d'alimentation électrique au récepteur de diffusion générale (14) si les données de la notification de diffusion générale d'urgence (b3 - b3-1) inclues dans les données d'annonciation (i₂) reçues par l'unité mobile de communication radio (2) depuis une station de diffusion générale (5) indiquent la présence d'une diffusion générale d'urgence, envoyée par station de diffusion générale (5), et configurent simultanément les données de condition de réception (b4-b7) inclues dans les données d'annonciation reçues par le récepteur de diffusion générale.

4. L'élément terminal mobile conformément à la revendication 3, où le contrôleur (10) fournit la source d'alimentation électrique par intermittence au récepteur de diffusion générale et juge la présence de la diffusion générale d'urgence en analysant l'onde de diffusion générale reçue au récepteur de diffusion générale (14) si l'unité mobile de communication radio (12) est incapable de communiquer avec l'élément station, et commute le récepteur de diffusion générale (14) en état capable de recevoir la diffusion générale d'urgence quand elle est jugée être présente.

5. L'élément terminal mobile conformément à la revendication 4, où le contrôleur (10) termine l'alimentation électrique par intermittence vers le récepteur de diffusion générale lorsque la communication entre l'unité mobile de communication radio (12) et l'élément station (3) est basculé d'un état désactivé à un état activé.

6. L'élément terminal mobile conformément à la revendication 3 comprenant de plus :
un émetteur sonore (22, 25) capable de configurer une fonction d'amortissement sonore, où
le contrôleur (10) libère la configuration si un amortisseur sonore de l'émetteur sonore est configuré à la réception de la diffusion générale d'urgence, puis exécute la réception de la diffusion générale d'urgence au moyen du récepteur de diffusion générale et une production vocale du contenu de la diffusion générale d'urgence au moyen de l'émetteur sonore.

7. L'élément terminal mobile conformément à la revendication 6, où le contrôleur (10) configure le volume sonore à un niveau maximum dans l'émetteur sonore (22, 25) quand la réception de la diffusion générale d'urgence au moyen du récepteur de diffusion générale et une production vocale du contenu de la diffusion générale d'urgence au moyen de l'émetteur sonore sont exécutées après qu'une configuration d'amortissement sonore de l'émetteur sonore ait été libérée.

8. L'élément terminal mobile conformément à la revendication 3 comprenant de plus :
une unité de stockage (11) pour la sauvegarde du contenu de la diffusion générale d'urgence, où le contrôleur (10) sauvegarde la diffusion générale d'urgence reçue dans l'unité de stockage.

9. L'élément terminal mobile conformément à la revendication 3 comprenant de plus :
un dispositif d'alarme (27, 28) pour annoncer la réception de la diffusion générale d'urgence à un utilisateur ; et
un dispositif d'entrée (23, 26) pour recevoir des données entrantes générées par l'utilisateur, où
le contrôleur (10) annonce la réception de la diffusion générale d'urgence à l'utilisateur au moyen du dispositif d'alarme lorsque la diffusion générale d'urgence est achevée, puis termine une opération d'annonce sur la réception au moyen du dispositif d'alarme après confirmation que l'entrée est exécutée vers le dispositif d'entrée par l'utilisateur qui a confirmé une annonce de réception au moyen du dispositif d'alarme.

10. L'élément terminal mobile conformément à la revendication 9, où le dispositif d'alarme (27, 28) informe l'utilisateur de la réception de la diffusion générale d'urgence par un, ou une combinaison de, affichage visuel, alarme sonore, vibration, et émission de lumière.

11. L'élément terminal mobile conformément à la revendication 8 d'une forme rabattable afin qu'il s'ouvre et se ferme librement, comprenant de plus :
un détecteur (29) pour détecter l'état d'ouverture et de fermeture de l'élément terminal mobile (2) ; et
un lecteur (21, 24, 22, 25) pour relire la diffusion générale d'urgence, où
le contrôleur (10) reçoit la diffusion générale d'urgence et la sauvegarde dans l'unité de stockage (11) sous un état dans lequel le détecteur détecte la fermeture de l'élément terminal mobile, puis lit la diffusion générale d'urgence enregistrée dans l'unité de stockage et afin qu'elle puisse être relue par le lecteur lorsque le détecteur détectera l'ouverture de l'élément terminal mobile.

12. L'élément terminal mobile conformément à la revendication 3 comprenant de plus :
un dispositif d'alarme (27, 28) pour informer l'utilisateur de la réception de la diffusion générale d'urgence, où
le contrôleur (10) informe l'utilisateur de la réception de la diffusion générale d'urgence au moyen du dispositif d'alarme lorsque le récepteur de diffusion générale reçoit la diffusion générale d'urgence.

13. L'élément terminal mobile conformément à la revendication 12, où :
le dispositif d'alarme (27, 28) informe l'utilisateur de la réception de la diffusion générale d'urgence par un, ou une combinaison de, affichage visuel, alarme sonore, vibration, et émission de lumière.

14. L'élément terminal mobile conformément à la revendication 3 comprenant de plus :
un dispositif d'affichage (21, 24) pour afficher le contenu de la diffusion générale d'urgence, où
le contrôleur (10) affiche le contenu de la diffusion générale d'urgence sur le dispositif d'affichage tout en conservant la communication actuelle si la diffusion générale d'urgence est reçue pendant la communication de l'élément terminal mobile avec un autre élément terminal mobile.

15. L'élément terminal mobile conformément à la revendication 8, où :
les données de la notification de diffusion générale d'urgence (b3, b3-1) comportent un identifiant (b3-1) capable d'identifier la diffusion générale d'urgence individuellement, et le contrôleur (10) mémorise l'identifiant inclus dans les données de la notification de diffusion générale d'urgence reçues et ne sauvegarde pas le contenu de la diffusion générale d'urgence actuelle dans l'unité de stockage (11) si l'identifiant contenu dans les données de la notification de diffusion générale d'urgence correspondant à la diffusion générale d'urgence reçue par le récepteur de diffusion générale est identique à l'identifiant précédemment sauvegardé.

16. L'élément terminal mobile conformément à la revendication 9, où :
les données de la notification de diffusion générale d'urgence (b3, b3-1) comportent un identifiant (b3-1) capable d'identifier la diffusion générale d'urgence individuellement, et
le contrôleur (10) mémorise l'identifiant inclus les données de la notification de diffusion générale d'urgence et continue une situation terminée de l'opération d'une annonce de réception par le dispositif d'alarme si l'identifiant contenu dans les données de la notification de diffusion générale d'urgence correspondant à la diffusion générale d'urgence reçue par le récepteur de diffusion générale est identique à l'identifiant précédemment sauvegardé après que l'utilisateur ait implémenté une confirmation de sortie vers le dispositif d'entrée(23, 26).

17. L'élément terminal mobile conformément à la revendication 3, comprenant de plus :
un dispositif d'alarme (27, 28) pour informer l'utilisateur de la réception de la diffusion générale d'urgence, où
les données de la notification de diffusion générale d'urgence (b3, b3-1) comportent des données de support (b8-b10) pour ce qui concerne la position de l'élément station, l'emplacement d'un désastre ou d'un accident, le site d'évacuation le plus proche, les commodités publiques, et
le contrôleur (10) informe l'utilisateur des données de support contenues dans les données de la notification de diffusion générale d'urgence correspondant à la diffusion générale d'urgence au moyen du dispositif d'alarme lorsque la diffusion générale d'urgence est reçue.

18. Une méthode de communication dans un élément terminal mobile (2) **caractérisée par** les étapes de :
réception, depuis un élément station (3), des données d'annonce (i₂) y compris les données de la notification de diffusion générale d'urgence (b3 - b3-1), notifiant une diffusion générale d'urgence depuis une station de diffusion générale (5) et recevant les données de conditions (b4-b7) nécessaires à la réception d'une diffusion générale d'urgence ; et
fourniture d'alimentation électrique au récepteur de diffusion générale (14) et configuration des données réceptrices de conditions dans le récepteur de diffusion générale en réponse aux données de la notification de diffusion générale d'urgence.

19. Une méthode de communication dans un élément terminal mobile conformément à la revendication 18, et incluant de plus les étapes de :
fourniture d'alimentation électrique par intermittence au récepteur de diffusion générale (14) et détection de l'existence d'une diffusion générale d'urgence dans une diffusion générale reçue par le récepteur de la diffusion générale si la communication avec l'élément station (5) est impossible ; et
basculement du récepteur de diffusion générale vers un état de réception de diffusion générale d'urgence lorsque l'existence de la diffusion générale d'urgence est détectée.

20. La méthode de communication dans un élément terminal mobile conformément à la revendication 19, incluant de plus les étapes d'arrêt de l'alimentation électrique par intermittence vers le récepteur de diffusion générale (14) lorsque la communication avec l'élément station (5) est basculée d'un état désactivé à un état activé.

21. la méthode de communication dans un élément terminal mobile conformément à la revendication 18, et incluant de plus les étapes de :
juger si un mode d'amortissement sonore est actif lors de la réception de la diffusion générale d'urgence ; et
annulation du mode d'amortissement sonore et réception de la diffusion générale d'urgence.

22. La méthode de communication vers l'élément terminal mobile conformément à la revendication 21, et incluant de plus l'étape de réception de la diffusion générale d'urgence à un volume maximum de reproduction si le mode d'amortissement sonore est annulé.

23. La méthode de communication vers l'élément terminal mobile conformément à la revendication 18, et incluant de plus l'étape d'enregistrement du contenu de la diffusion générale d'urgence dans une unité de stockage (11) à réception de la diffusion générale d'urgence.

24. La méthode de communication vers l'élément terminal mobile conformément à la revendication 18, et incluant de plus l'étape d'informer un utilisateur que la diffusion générale d'urgence a été reçue à l'achèvement de la diffusion générale d'urgence, et l'étape d'achèvement de l'étape d'information lorsque l'utilisateur émet une confirmation d'entrée en réponse à la notification que la diffusion générale d'urgence a été reçue.

25. La méthode de communication vers l'élément terminal mobile conformément à la revendication 24, l'étape d'information est accomplie au moyen d'un ou d'une combinaison de, affichage, audio, vibration et émission de lumière.
